# EUROPÄISCHE PATENTSCHRIFT

(11) **EP 0 395 052 B1**
(45) Veröffentlichungstag und Bekanntmachung des Hinweises auf die Patenterteilung: **14.07.1993**
(21) Anmeldenummer: 90107940.0
(22) Anmeldetag: 26.04.1990
(51) Int. Cl.: B60R 1/06

(54) **Verstellbarer Rückspiegel für ein Kraftfahrzeug**
Adjustable rearview mirror for a motor vehicle
Rétroviseur réglable pour véhicule automobile

(30) Priorität: 26.04.1989 DE 3913776
(43) Veröffentlichungstag der Anmeldung: 31.10.1990
(73) Patentinhaber: MAGNA AUTECA AUTOZUBEHÖRGESELLSCHAFT M.B.H., A-8160 Weiz (AT)
(72) Erfinder: Mansell, David, Dr., Whaley Bridge, Stockport (GB); Gorst, Alan, Ashton-Under-Lyne, Lancashire (GB)
(74) Vertreter: Grünecker, Kinkeldey, Stockmair & Schwanhäusser Anwaltssozietät

(56) Entgegenhaltungen:
- EP-A- 0 085 737
- DE-U- 8 210 515
- US-A- 4 572 626
- PATENT ABSTRACTS OF JAPAN, Band 9, Nr. 107 (M-378)[1830], 11. Mai 1985; & JP-A-59 230 840 (MATSUYAMA SEISAKUSHO K.K.) 25-12-1984
- PATENT ABSTRACTS OF JAPAN, Band 9, Nr. 107 (M-378)[1830], 11. Mai 1985; & JP-A-59 230 839 (MATSUYAMA SEISAKUSHO K.K.) 25-12-1984

## Beschreibung

Die vorliegende Erfindung bezieht sich auf einen verstellbaren Rückspiegel gemäß dem Oberbegriff des Anspruchs 1.

Ein solcher Rückspiegel ist beispielsweise aus der JP-A 59 230 840 oder auch der JP-A 59 230 839 bekannt. Solche Rückspiegel weisen ein Gehäuse mit einer Spiegelplatte auf, deren Winkelstellung in bezug auf das Gehäuse in zwei Ebenen verstellbar ist. Die Verstellung der Spiegelplatte erfolgt mittels zweier Elektromotoren, deren Antriebswellen mit Zahnschnecken gekoppelt sind, durch die die Drehbewegung auf Verstellzahnräder übertragen wird, die eine konzentrisch zu ihrer Drehachse verlaufende Gewindebohrung aufweisen. In dieser Gewindebohrung ist eine drehgesicherte Hubspindel aufgenommen, die an der Rückseite der Spiegelplatte eingreift. In den Hubspindeln ist eine in Längsrichtung verlaufende Nut vorgesehen, in die, im Falle der JA-A 59 230 840 ein Vorsprung zur Drehsicherung eingreift. Ferner sind bei beiden bekannten Rückspiegeln noch Einrichtungen zur Erfassung der axialen Lage der Hubspindel vorgesehen.

Aus dem deutschen Gebrauchsmuster 82 10 515 ist ferner bekannt, die axiale Bewegung der Hubspindel mittels eines Drehpotentiometers zu erfassen, auf dessen Welle ein Ritzel angeordnet ist, das mit einer Verzahnung an der Außnseite der Spindel in Eingriff steht.

Es ist Aufgabe der vorliegenden Erfindung, einen verstellbaren Rückspiegel der eingangs genannten Art zu schaffen, der einfach aufgebaut und zuverlässig im Betrieb ist.

Diese Aufgabe wird erfindungsgemäß durch den Gegenstand des Anspruchs 1 gelöst.

Die erfindungsgemäße Lösung schafft einen verstellbaren Rückspiegel mit einer besonders einfachen und zuverlässig arbeitenden Hubsinrichtung. Die Elektromotoren haben als Zahnschnecken ausgebildete Abtriebswellen, die direkt oder über die Zwischenschaltung eines weiteren Zahnrades die Verstellzahnräder antreiben. Die Umwandlung der Drehbewegung der Schneckenräder in die zur Verstellung des Rückspiegels erforderlichen Hubbewegung wird bewirkt, indem die Verstellzahnräder mit einer zentrischen Gewindebohrung versehen sind, in der ein Hubelement mit einem entsprechend gestalteten Gewinde aufgenommen ist. Das Hubelement weist eine Nut auf, die parallel zu seiner Längsachse verläuft und in die ein Eingriffselement eingreift, welches eine Drehbewegung des Hubelementes verhindert. Sobald sich nun die Schneckenräder drehen, werden die Hubelemente, die dieser Drehung nicht folgen können, aufgrund des Zusammenspiels der Gewinde entlang ihrer Längsachse verschoben, wodurch die gewünschte Verstellung der Spiegelplatte erreicht wird. Das Besondere beim Gegenstand der vorliegenden Erfindung ist, daß das Eingriffselement, das zur Drehverhinderung in die Nut des Hubelements eingreift, als Zahnrad ausgebildet ist, das auf einer um seine Achse drehbaren Welle angeordnet ist, und welches mit einer Verzahnung zusammenwirkt, die am Boden der Nut der Hubspindel vorgesehen ist. Die Welle, die unmittelbar mit der Welle eines Dreh-Potentiometers verbunden sein kann, oder auch die Welle eines Dreh-Potentiometers ist, überträgt durch das Ritzel somit die axiale Bewegung der Hubspindel unmittelbar auf das Dreh-Potentiometer, so daß eine genaue Erfassung der axialen Bewegung der Hubspindel möglich ist.

Bei der erfindungsgemäßen Gestaltung der Hubelemente bewegen sich die Hubelemente linear auf und ab, wähnend die Spiegelplatte eine Drehbewegung um einen Drehpunkt ausführt. Infolge dieser Drehbewegung ändert sich die Winkelzuordnung zwischen Hubelement und Spiegelplatte. Die Gestaltung einer Verbindung zwischen dem Hubelement und der Spiegelplatte, die diese Winkeländerung ausgleicht, ist ein weiteres Problem, das die vorliegende Erfindung löst. Als Lösung wird vorgeschlagen, das Hubelement an seinem der Spiegelplatte zugewandten Ende als Kugelkopf auszubilden, der in eine entsprechende Längsnut, die an der Spiegelplatte angeordnet ist, eingreift. Bei dieser Gestaltung sind die Kontaktpunkte der Hubelemente genau im Wirtel von 90 ° in bezug auf den Drehpunkt des Spiegels auf deren Rückseite angeordnet, so daß die Bewegung eines Hubelementes keinen Einfluß auf die Bewegung des anderen Hubelementes hat. Die Winkelverlagerung des Spiegels bei der Betätigung des jeweiligen Hubelementes wird dann dadurch ausgeglichen, daß das Hubelement mit dem Kugelkopf in der entsprechend ausgestalteten Längsnut gleitet. Die Drehbewegung in bezug auf dieses Hubelement, die von dem anderen Hubelement bewirkt werden, werden durch die Kugelform des Kopfes selbst ausgeglichen.

Auf diese Art und Weise wird eine besonders einfach gestaltete Verbindung zwischen Hubslement und Rückspiegel erreicht, die keine Winkelverlagerung des Hubselementes selbst erfordert, und die somit ebenfalls zur Lösung der der vorliegenden Erfindung zugrundeliegenden allgemeinen Aufgabe, nämlich die Gestaltung eines einfach aufgebauten verstellbaren Rückspiegels, beiträgt.

Nach einer weiteren vorteilhaften Ausführung der vorliegenden Erfindung ist die Rückspiegelanordnung mit einer Steuereinrichtung versehen, welche den Neigungswinkel des Spiegels in der vom Fahrer gewünschten Weise einstellt. Diese Steuereinrichtung besteht vorzugsweise aus einem Mikroprozessor, dem die entsprechenden Einstelldaten zugeführt werden. Der Mikroprozessor steuert die Bewegungsrichtung und die Bewegungsdauer der Elektromotoren in Abhängigkeit des Widerstandes der Dreh-Potentiometer und stoppt dieiten der Bewegung , wenn die gewünschten Widerstandswerte, d.h. also die gewünschte Hubposition der Hubelemente, erreicht ist.

Gemäß einer vorteilhaften Ausgestaltung der Erfindung ist die Rückspiegelanordnung mit einer Speichereinrichtung versehen, in welche die Einstelldaten für diese mit der Spiegelneigung gespeichert werden können. Der Fahrer ruft dann, nachdem er im Fahrzeug Platz genommen hat, z. B. anhand einer Zifferneingabe, die für ihn abgespeicherten Speicherdaten ab, die automatisch der Steuereinrichtung zugeführt werden, die dann, wie vorstehend beschrieben, den Spiegel in die erwünschte Position bringt.

Weitere Vorteile, Merkmale und Anwendungsmöglichkeiten der vorliegenden Erfindung ergeben sich aus den Unteransprüchen. In der nachfolgenden Beschreibung wird ein Ausführungsbeispiels der Erfindung in bezug auf die beigefügten Zeichnungen erläutet. Darin zeigt:
**Fig. 1** einen Schnitt durch das Spiegelgehäuse mit der Verstelleinrichtung;
**Fig. 2** eine perspektivische Ansicht der Verstelleinrichtung;
**Fig. 3** einen Querschnitt durch das Spiegelgehäuse, wobei die Ausführung geringfügig von der der Fig. 2 abweicht;
**Fig. 4** eine Aufsicht auf die Verstelleinrichtung mit abgenommener Spiegelplatte;
**Fig. 5** eine perspektivische Ansicht eines Details der Verstelleinrichtung;
**Fig. 6** ein Blockschaltbild einer Regeleinrichtung zur automatischen Einstellung des erfindungsgemäßen Rückspiegels.

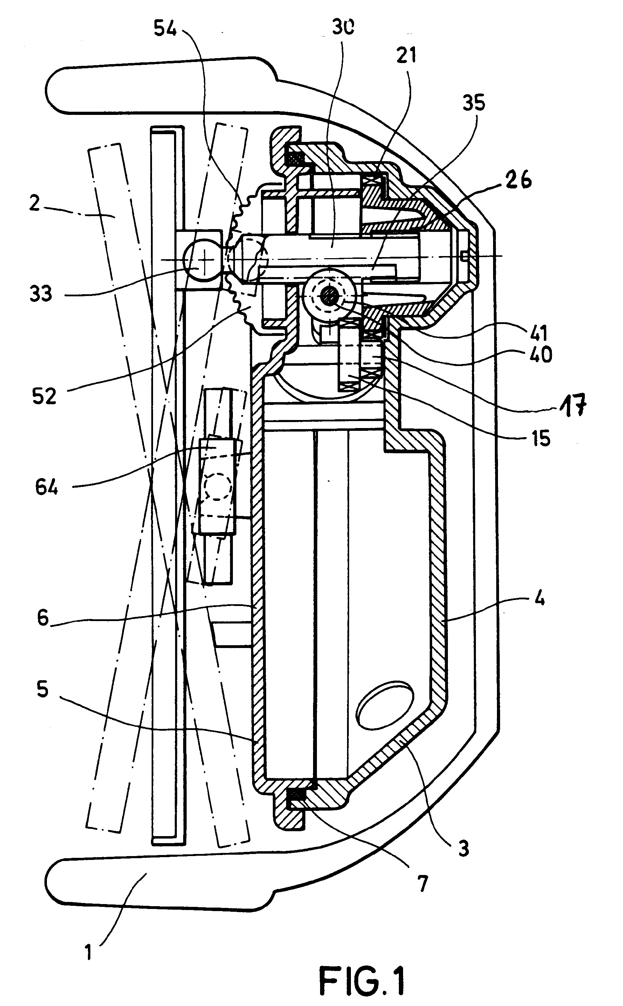

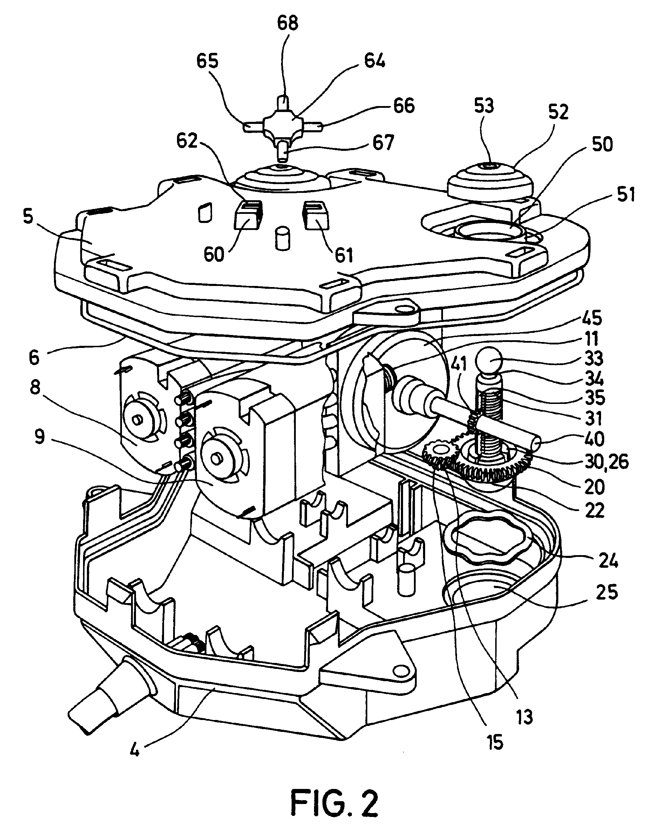

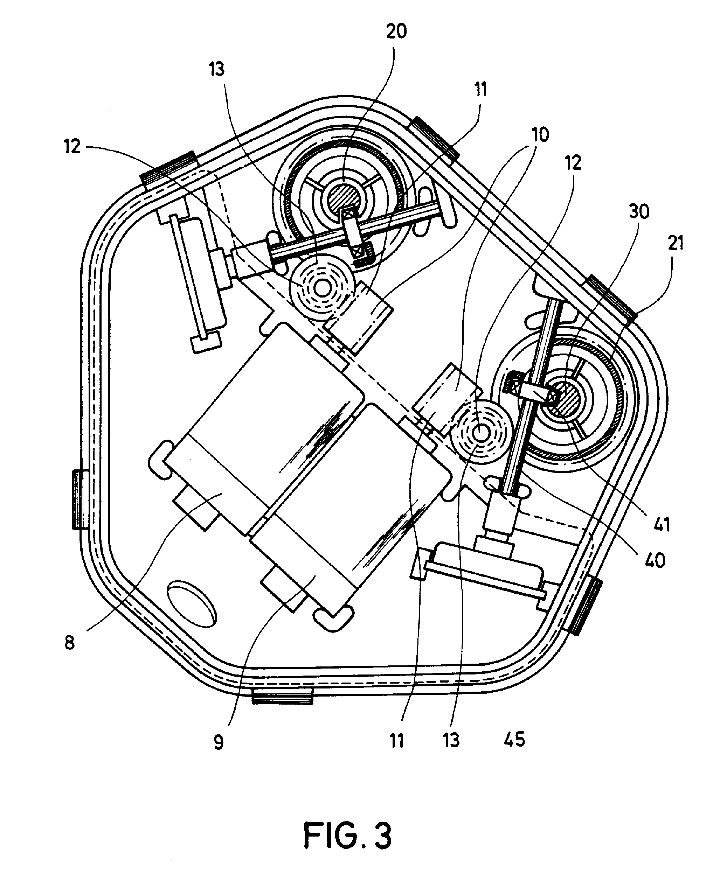

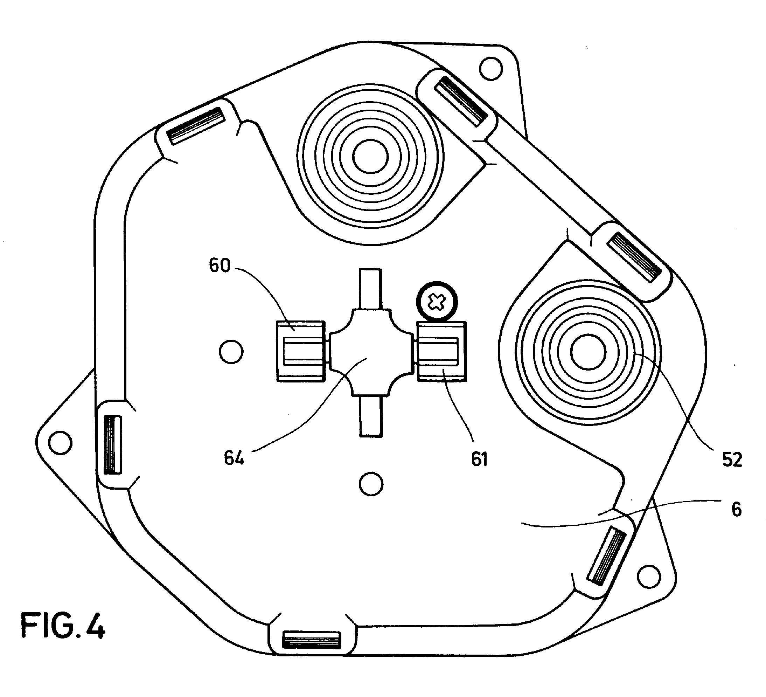

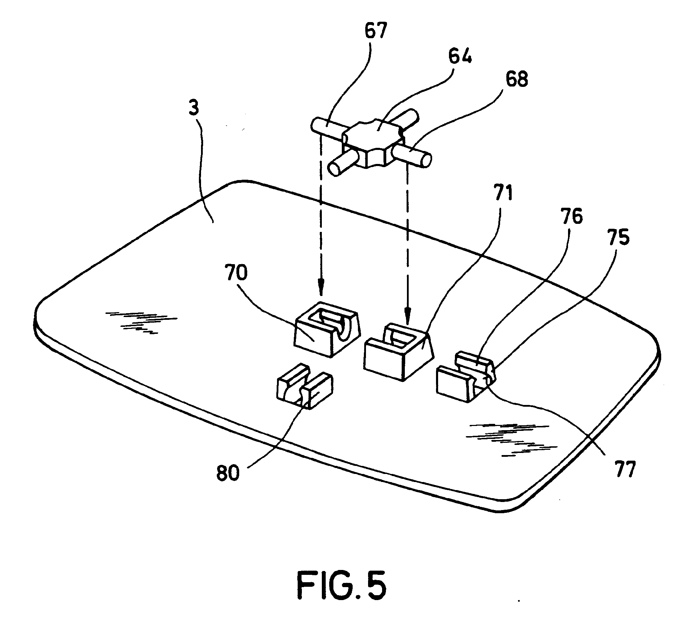

Nachfolgend wird ein Ausführungsbeispiel der vorliegenden Erfindung in bezug auf die Fig. 1 bis 5 beschrieben.

Wie in Fig. 1 zu erkennen ist, besteht der verstellbare Rückspiegel aus einem Gehäuse 1, in welchem eine Spiegelplatte 2 schwenkbar angeordnet ist. Das Verschwenken erfolgt über einen Schwenkmechanismus, der allgemein als 3 bezeichnet ist, und der im folgenden im einzelnen erläutert wird.

Der Antrieb des Schwenkmechanismus erfolgt über die Elektromotoren 8 und 9. Auf den Ausgangswellen der Elektromotoren 8 und 9 sitzen jeweils Zahnschnecken 10, 11, die in Eingriff mit einem Zwischenzahnrad 12, 13 stehen. Diese Zwischenräder 12, 13 weisen ein oberes Zahnrad 14, 15 auf, welches in Eingriff mit den Zahnschnecken 10, 11 steht und ein unteres Rad 16, 17 mit kleinem Durchmesser, welches in Eingriff mit Verstellzahnrädern 20, 21 steht.

Die Verstellzahnräder sind einstückig mit einem Kalottenkörper 22, 23 ausgebildet, die sich jeweils über eine Federscheibe 24 in einer entsprechend geformten Ausnehmung 25 des Gehäuses 1 abstützen. Durch die Federscheibe wird ein spielfreier Betrieb der nachfolgend erläuterten Hubeinrichtung bewirkt.

Jedes Verstellzahnrad 20, 21 weist eine zentrale Bohrung 26 auf, die mit einem Feingewinde versehen ist, in dem jeweils eine Hubspindel 30 geführt ist. Die Hubspindel 30 besteht aus einem zylindrischen Abschnitt 31 der ein sich im wesentlichen über seine gesamte Länge aufweisendes Feingewinde 32 aufweist, das komplementär zum Gewinde der Bohrung 26 der Zahnräder 20, 21 gestaltet ist. Am oberen Ende der Hubspindel 30 ist ein Kugelkopf 33 vorgesehen, dessen Funktion später erläutert wird.

Entlang der Mantellinie des zylindrischen Abschnittes 31 der Hubspindel 30 ist eine Nut 35 vorgesehen, die von zwei glatten Seitenwänden begrenzt ist und in ihrem Bodenbereich eine Verzahnung 36 aufweist. Diese Verzahnung 36 ist in der Form einer Zahnstange ausgebildet.

In einem Winkel von 90 ° zur Zylinderachse der Hubspindel 30 ist eine gehäusefeste, drehbare Welle 40 vorgesehen, auf der drehfest ein Ritzel 41 angeordnet ist. Das Ritzel 41 hat eine Verzahnung, die der
Verzahnung 36 in der Nut 35 entspricht.

Die Welle 40 ist gleichzeitig die Antriebswelle eines Drehpotentiometers 45, d.h. eines Potentiometers, das seinen Ohm'schen Widerstand in Abhängigkeit des Verstellwinkels der Welle 40 ändert.

Der Verstellmechanismus 3 ist in einer unteren Gehäusewanne 4 aufgenommen, die mit einem Gehäusedeckel 5 nach oben abgeschlossen ist. Zwischen der Gehäusewanne 4 und dem Gehäusedeckel 5 befindet sich eine Dichtung 6, die das Eindringen von Feuchtigkeit und Schmutz in das durch die Gehäusewanne 4 und den Gehäusedeckel 5 gebildete Verstellgehäuse 7 verhindert.

Der Gehäusedeckel 5 weist eine kreisförmige Aussparung 50 auf, die von einem Zylinderring 51 umgeben ist. Die Aussparung 50 erlaubt den Durchtritt der Hubspindel 30 durch den Gehäusedeckel 5. Auf den Zylinderring 51 wird eine Gummimanschette 52 mit einer zentrischen Bohrung 53 aufgesetzt.

Die Manschetten 52 bestehen aus Gummi oder aus einem ähnlichen elastischen Kunststoff, und bewirken die Abdichtung der Aussparung 50. Die Bohrung 53 ist so gestaltet, daß sie dem zylindrischen Zwischenstück 34 zwischen dem Kugelkopf 33 der Hubspindel 30 und dem zylindrischen Abschnitt 33 der Hubspindel durchmessermäßig angepaßt ist.

Die Manschette 52 weist eine Vielzahl von Falten 54 auf, wie am besten in Fig. 1 zu erkennen ist. Durch diese Falten 54 wird es der Manschette ermöglicht, ihre Form in Abhängigkeit von der Bewegung der Hubspindel 30 zu verändern. Die erwünschte Abdichtung der Durchführung der Hubspindel wird somit bei allen Höheneinstellungen der Hubspindel aufrechterhalten.

Auf der dem Verstellmechanismus 3 abgewandten Seite des Gehäusedeckels 5 sind zwei Halteblöcke 60, 61 vorgesehen. Diese Halteblöcke weisen jeweils eine Nut 62 mit im wesentlichen kreisförmigem Querschnitt auf, die zur oberen Seite der Halteblöcke teilweise offen ist. In die Halteblöcke 60 und 61 greifen die zylindrischen Längszapfen 65 und 66 eines Kreuzgelenkzapfens 64 ein. Die zylindrischen Querzapfen 67, 68 greifen in Halteblöcke 70, 71 auf der Rückseite der Spiegelplatte 3 ein.

In der Verlängerung der durch die Zapfen 67, 68 des Kreuzgelenkzapfens 64 gehenden Achse, ist, wenn diese in den Halteblöcken 70, 71 der Spiegelrückseite eingeklemmt ist, ein erster Gleitblock 75 auf der Rückseite der Spiegelplatte 2 angeordnet. Dieser Gleitblock weist eine durchgehende Nut 76 auf, die einen kreisringförmige Querschnitt 77 aufweist.

Ein zweite Gleitblock 80 ist in einem Winkel von exakt 90 ° in bezug auf den Mittelpunkt des Kreuzgelenkzapfens 64, d.h. auf die Mittellinie zwischen dem Halteblock 70 und dem Halteblock 71 auf der Rückseite der Spiegelplatte 2 angeordnet. Der zweite Gleitblock 80 ist genauso gestaltet wie der erste Gleitblock 75.

Die Kugelköpfe 33 der Hubspindel 30 greifen in montiertem Zustand in die Nuten der Gleitblöcke 75, 80, ein.

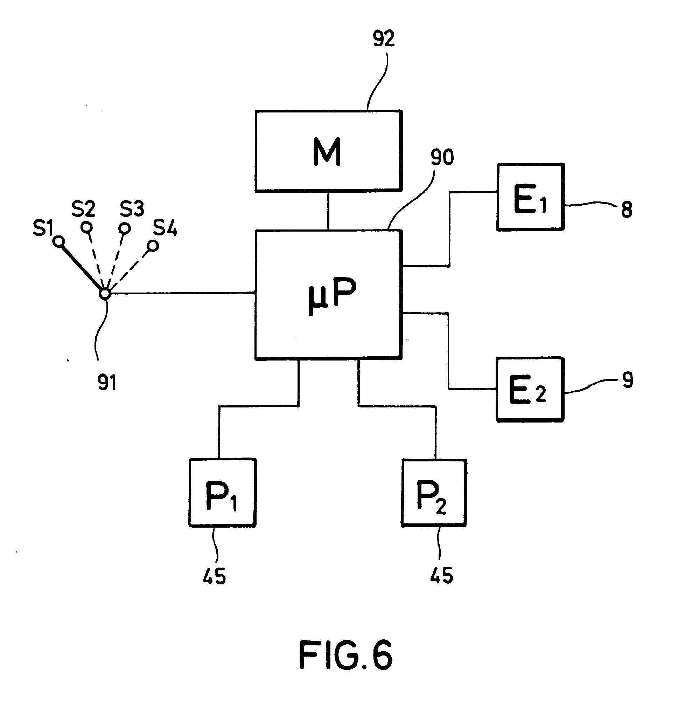

Eine Einrichtung, mit der die automatische Verstellung des vorgeschriebenen Ausführungsbeispiels des erfindungsgemäßen Rückspiegels bewirkt werden kann, wird nun in bezug auf die Fig. 6 erläutert.

Die Regeleinrichtung weist einen Mikroprozessor 90 auf, der vorzugsweise als Single-Chip-Prozessor aufgebaut ist. Der Mikroprozessor ist mit einem Wahlschalter 91 verbunden, an dem, im dargestellten Ausführungsbeispiel, vier Spiegelpositionen für vier verschiedene Fahrer, vorgewählt werden können. Die einzelnen Positionen des Schalters sind schematisch durch die Bezeichnungen S1, S2, S3, S4 gekennzeichnet.

Die Regeleinrichtung weist weiterhin eine Speichereinrichtung 92 auf. In der Speichereinrichtung 92 werden die zu den einzelnen Schalterstellungen zugeordneten Werte für die verschiedenen Fahrer abgespeichert.

Der Mikroprozessor ist weiterhin mit den Elektromotoren 8, 9 verbunden, wobei diese Verbindung im Blockschaltbild nur schematisch dargestellt ist. In der praktischen Ausführung erfolgt diese Verbindung selbstverständlich über entsprechende Relais.

Der Mikroprozessor ist weiterhin mit den Drehpotentiometern 45 verbunden, was im Blockschaltbild durch die Begriffe P₁ und P₂ gekennzeichnet ist.

Die Funktion des beschriebenen Ausführungsbeispiels der Erfindung ist nun wie folgt:

Der Fahrer wählt, sobald er seinen Platz im Fahrzeug eingenommen hat, die für ihn abgespeicherte Spiegelposition, wodurch die automatische Verstellung des Spiegels ausgelöst wird. Der Mikroprozessor stellt fest, welche Speichereinstellung gewählt ist und liest die entsprechenden Werte aus dem Speicher 92 aus. Wenn diese Werte von den aktuell festgestellten Werten der Drehpotentiometer 45 abweichen, gibt der Mikroprozessor ein entsprechendes Signal zur Steuerung der Elektromotoren 8, 9 aus. Dadurch dreht sich z.B. der Elektromotor 9 und damit die auf seiner Abtriebswelle angeordnete Getriebeschnecke 11. Über die Getriebeschnecke 11 wird das obere Rad 15 des Zwischenzahnrades 13 gedreht. Da das obere Rad 15 einstückig mit dem unteren Rad 17 verbunden ist, dreht sich gleichzeitig auch dieses Zahnrad, welches sich im Eingriff mit dem Verstellzahnrad 21 befindet. Das Verstellzahnrad 21 dreht sich dadurch, womit sich auch die Hubspindel 30 zu drehen versucht. Die Hubspindel 30 wird aber durch das Ritzel 41, das mit der Verzahnung 36 in der Nut 35 in Eingriff steht, an einer Drehbewegung gehindert. Wenn die Hubspindel 30 mit ihrem Gewinde 32 in das Gewinde der Bohrung 26 des Verstellzahnrades 21 eingeschraubt ist, bewirkt die Verdrehung des Verstellzahnrades bei gleichzeitiger Verdrehsicherung der Hubspindel je nach Drehrichtung und Gewindesteigung ein Ausfahren oder ein Einfahren der Hubspindel in bezug auf die Spiegelplatte 3. Während der Hubbewegung ändert sich die Winkelstellung der Spiegelplatte 2 in bezug auf die Hubspindel 30. Diese Winkeländerung wird ausgeglichen, indem der Kugelkopf 33 der Hubspindel 30 in der Längsnut des Gleitblocks 76 bzw. des Gleitblocks 80 entlanggleitet. Besondere Maßnahmen, die eine Winkeleinstellbarkeit der Hubspindel ermöglichen, sind deshalb nicht erforderlich.

Mit der linearen Bewegung der Hubspindel bewegt sich durch die Geradverzahnung 36 auch das Ritzel 41 und damit die Welle 40. Dadurch wird das Potentiometer 45 verstellt und der Mikroprozessor kann somit feststellen, wann die Hubspindel die vorgegebene Hubposition erreicht hat. Sobald dies geschehen ist, stoppt der Mikroprozessor 90 den Elektromotor und die Spiegelplatte wird in ihrer neu eingestellten Stellung gehalten.

Die dargestellte Vorrichtung weist weiterhin eine (nicht dargestellte) Einrichtung auf, um die Spiegelplatte auch ohne Bezug auf bereits abgespeicherte Werte einzustellen. Diese Einrichtung besteht vorzugsweise aus einem in vier verschiedenen Richtungen betätigbaren Schalter, durch den die Elektromotoren in beide Richtungen angetrieben werden können. Sobald der Fahrer unter Verwendung dieses Schalters den Spiegel in eine ihm angenehme Position eingestellt hat, kann er dann über eine weitere Schalteinrichtung das Abspeichern dieser Werte in Zuordnung zu einer bestimmten Auswahlnummer veranlassen.

Die vorbeschriebene Einrichtung zur automatischen Einstellung des Rückspiegels kann mit einer Einrichtung kombiniert werden, die ein automatisches Einstellen des Fahrersitzes in eine vorgewählte Position ermöglicht. Die Spiegelverstellung wird dann so gesteuert, daß beim Abrufen einer abgespeicherten Sitzposition gleichzeitig auch die entsprechenden Speicherwerte für die Spiegelposition ausgelesen werden und eine automatische Verstellung des Spiegels, wie vorstehend beschrieben, durchgeführt wird.

## Patentansprüche

1. Verstellbarer Rückspiegel mit einem Gehäuse (1) und einer Spiegelplatte (2), deren Winkelstellung in Bezug auf das Gehäuse in zwei Ebenen verstellbar ist, wobei die Verstellung mittels zweier Elektromotoren (8,9) erfolgt, deren Antriebswellen mit Zahnschnecken (10,11) gekoppelt sind, durch die die Drehbewegung auf Verstellzahnräder (20,21) übertragen wird, die eine konzentrisch zu ihrer Drehachse verlaufende Gewindebohrung (26) aufweisen, in welcher eine an der Rückseite der Spiegelplatte (2) angreifende Hubspindel (30) aufgenommen ist, die eine parallel zu ihrer Längsachse verlaufende Nut (35) aufweist, in die ein im wesentlichen gehäusefestes Eingriffselement (41) eingreift, **dadurch gekennzeichnet,** daß der Nutgrund der Nut (35) mit einer Verzahnung (36) versehen ist und daß das im wesentlichen gehäusefeste Eingriffselement zum Verhindern einer Drehung der Hubspindel als Ritzel (41) ausgebildet ist, welches auf einer gehäusefest gelagerten drehbaren Welle (40) angeordnet ist, die mit der Drehwelle eines Drehpotentiometers (45) verbunden oder einstückig mit dieser ausgebildet ist.

2. Verstellbarer Rückspiegel nach Anspruch 1, **dadurch gekennzeichnet**, daß das der Spiegelplatte (2) zugewandte Ende der Hubspindel (30) als Kugelkopf (33) ausgebildet ist, der in einer Längsnut (76) eines Gleitblockes (75, 80), welche an der Rückseite der Spiegelplatte (3) angeordnet ist, aufgenommen wird, wobei der Querschnitt der Nut so gestaltet ist, daß eine Längsverschiebung des Kugelkopfes innerhalb der Nut möglich ist.

3. Verstellbarer Rückspiegel gemäß Anspruch 1 oder 2, **dadurch** **gekennzeichnet**, daß eine Regeleinrichtung (40) vorgesehen ist, welche die Winkelverstellung der Spiegelplatte (2) in Abhängigkeit des Drehwinkels der Welle (40) regelt.

4. Verstellbarer Rückspiegel gemäß Anspruch 3, **dadurch gekennzeichnet**, daß eine Speichereinrichtung (92) vorgesehen ist, in der für 1-n verschiedene Fahrer Werte abspeicherbar sind, und in der jeweils die für den jeweiligen Fahrer bei einem vorhergehenden Einstellvorgang ermittelten Werte der Spiegeleinstellung abgespeichert sind.

5. Verstellbarer Rückspiegel gemäß einem der Ansprüche 1 bis 4, **dadurch** **gekennzeichnet**, daß zwischen den Zahnschnecken und den Verstellzahnrädern eine Zwischenzahnwelle vorgesehen ist, welche ein erstes großes Zahnrad (14, 15) und ein zweites kleines Zahnrad (16, 17) aufweist, und welches eine weitere Untersetzung der Ausgangsdrehzahl des Elektromotores bewirkt.

## Claims

1. Adjustable rear view mirror with a housing (1) and a mirror plate (2) of which the angular position relative to the housing is adjustable in two planes, wherein adjustment is made by means of two electric motors (8, 9) of which the drive shafts are coupled to worms (10, 11) by which the rotary movement is transmitted to adjusting gears (20, 21) which comprise a threaded bore (26) extending concentrically to their axis of rotation, in which bore is held a lifting spindle (30) which engages on the rear side of the mirror plate (2) and which comprises a groove (35) extending parallel to its longitudinal axis, in which groove engages a meshing element (41) essentially fixed to the housing, characterised in that the bottom of the groove (35) is provided with teeth (36) and in that the meshing element essentially fixed to the housing is constructed, to prevent rotation of the lifting spindle, as a pinion (41) which is mounted on a rotatable shaft (40) which is mounted fixed to the housing and which is connected to the rotary shaft of a rotary potentiometer (45) or formed integrally therewith.

2. Adjustable rear view mirror according to claim 1, characterised in that the end of the lifting spindle (30) facing towards the mirror plate (2) is constructed as a ball head (33) which is held in a longitudinal groove (76) of a sliding block (75, 80) which is arranged on the rear side of the mirror plate (3), the cross-section of the groove being shaped in such a way that longitudinal displacement of the ball head inside the groove is possible.

3. Adjustable rear view mirror according to claim 1 or 2, characterised in that a regulating device (40) is provided, which regulates the angular adjustment of the mirror plate (2) as a function of the angle of rotation of the shaft (40).

4. Adjustable rear view mirror according to claim 3, characterised in that a memory device (92) is provided in which can be stored values for 1-n different drivers and in which are stored respectively the values of mirror adjustment determined for the respective driver in a preceding adjustment process.

5. Adjustable rear view mirror according to any of claims 1 to 4, characterised in that between the worms and the adjusting gears is provided an intermediate gear shaft which comprises a first large gear (14, 15) and a second small gear (16, 17) and which causes a further reduction of the output speed of the electric motor.

## Revendications

1. Rétroviseur réglable comprenant un boîtier (1) et une plaque de miroir (2) dont la position angulaire est réglable dans deux plans par rapport au boitier, le réglage s'effectuant au moyen de deux moteurs électriques (8, 9) dont les arbres de sortie sont reliés à des vis sans fin (10, 11) qui transmettent le mouvement de rotation à des couronnes dentées de réglage (20, 21) qui comportent un trou taraudé (26) concentrique à leur axe de rotation et dans lequel est logée une tige filetée de positionnement (30) qui attaque le dos de la plaque de miroir (2) et qui comporte une rainure (35) qui est parallèle à son axe longitudinal et dans laquelle pénètre un élément de retenue (41) occupant une position sensiblement fixe par rapport au boitier, caractérisé en ce que le fond de la rainure (35) comporte une denture (36) et en ce que l'élément de retenue occupant un position sensiblement fixe par rapport au boitier et empêchant une rotation de la tige filetée de positionnement est conformé en un pignon (41) qui est disposé sur un arbre rotatif (40) monté en position fixe par rapport au boitier et relié à l'arbre de rotation d'un potentiomètre (45) de rotation ou qui est en une pièce à cet arbre.

2. Rétroviseur réglable selon la revendication 1, caractérisé en ce que l'extrémité de la tige filetée de positionnement (30) qui est tournée vers la plaque de miroir (2) est conformmée en tête sphérique (33) qui est logée dans une gorge londitudinale (76) d'un bloc de coulissement (76, 80) qui est disposé au dos du miroir plan (3), la section de la gorge étant conformée de manière à permettre un déplacement longitudinal de la tête sphérique à l'intérieur de la gorge.

3. Rétroviseur réglable selon la revendication 1 ou 2, caractérisé en ce qu'un dispositif de réglage (40) qui est prévu règle la position angulaire de la plaque de miroir (2) en fonction de l'angle de rotation de l'arbre (40).

4. Rétroviseur réglable selon la revendication 3, caractérisé en ce qu'il est équipé d'un dispositif de mémorisation (92) dans lequel peuvent être mémorisées des valeurs pour 1-n conducteurs différents et dans lequel sont mémorisées les valeurs de la position du miroir qui ont été déterminées pour chaque conducteur particulier lors d'un processus précédent de réglage.

5. Rétroviseur réglable selon l'une des revendications 1 à 4, caractérisé en ce qu'un arbre denté intermédiaire prévu entre les vis sans fin et les couronnes dentées de réglage comporte un premier grand pignon (14, 15) et un second pignon plus petit (16, 17) et produit un complément de démultiplication de la vitesse de sortie du moteur électrique.
